# EUROPÄISCHE PATENTSCHRIFT

(11) **EP 1 353 096 B1**
(45) Veröffentlichungstag und Bekanntmachung des Hinweises auf die Patenterteilung: **08.09.2004**
(21) Anmeldenummer: 03005034.8
(22) Anmeldetag: 06.03.2003
(51) Int. Cl.: F16J 15/32, F16J 15/56

(54) **Dichtungseinrichtung**
Sealing
Joint d'étanchéité

(30) Priorität: 08.04.2002 DE 10215311
(43) Veröffentlichungstag der Anmeldung: 15.10.2003
(73) Patentinhaber: Hammelmann Maschinenfabrik GmbH, 59302 Oelde (DE)
(72) Erfinder: Jarchau, Michael, Dipl-Ing., 59302 Oelde (DE); Helmig, Egbert, Dipl.-Ing., 59320 Ennigerloh (DE); Helmig, Burghard, 59269 Beckum (DE)
(74) Vertreter: Dantz, Jan Henning

(56) Entgegenhaltungen:
- EP-A- 0 418 732
- EP-A- 0 670 444
- WO-A-02/08614
- DE-A- 3 225 906
- DE-A- 4 106 459
- GB-A- 2 115 518
- US-A- 3 057 630
- US-A- 3 601 419
- US-A- 3 663 024
- US-A- 3 942 806
- US-A- 5 755 446
- PATENT ABSTRACTS OF JAPAN vol. 016, no. 047 (M-1208), 6. Februar 1992 (1992-02-06) & JP 03 249481 A (RIKEN CORP;OTHERS: 01), 7. November 1991 (1991-11-07)

## Beschreibung

Die vorliegende Erfindung betrifft eine Dichtungseinrichtung gemäß dem Oberbegriff des Anspruchs 1.

Zur Abdichtung einer sich bewegenden Welle oder Stange im Übergangsbereich zwischen einem z. B. ein flüssiges Medium führenden Hochdruckraum und einem Niederdruckbereich, ist es bekannt, Dichtungen aus thermoplastischen oder elastomeren Materialien einzusetzen, die einerseits an der Welle umfänglich anliegen und andererseits am Gehäuse oder Teilen davon. Eine derartige Dichtung ist z.B. aus dem Dokument GB-A-2 115 518 bekannt.

Aufgrund der hohen Drücke, die bei solchen Systemen über 200 bar liegen, sowie einer sich daraus im Verhältnis zum Niederdruckbereich ergebenden Druckdifferenz, der Bewegungsgeschwindigkeit der Welle, der Temperatur und Art des abzudichtenden Mediums ist ein sehr hoher Verschleiß der Dichtringe zu beklagen, woraus sich eine nur geringe Lebensdauer mit einer entsprechend niedrigen Standzeit des Systems ergibt, in dem eine solche Dichtungseinrichtung Verwendung findet. Insgesamt ist die dauerhafte Zuverlässigkeit des Systems stark eingeschränkt.

Darüber hinaus führt natürlich der geschilderte betriebsbedingte Verschleiß der Dichtringe und die damit verbundenen häufigen Betriebsunterbrechungen zu erheblichen Kosten, zu denen sich die Instandsetzungskosten addieren, so daß eine gattungsgemäße Dichtungseinrichtung einem optimierten wirtschaftlichen Betrieb entgegensteht.

Um diese Nachteile der bekannten Dichtungseinrichtungen zu umgehen, bestehen andere Dichtungslösungen darin, einen Dichtring vorzusehen, der die Welle mit einem umfänglichen geringen Drosselspalt umgreift. Über die Länge dieses Drosselspaltes wird die Druckdifferenz zwischen dem Hochdruckraum und dem Niederdruckbereich abgebaut.

Allerdings ist dies verbunden mit einem relativ hohen Leckagestrom, der auch durch die Strömungsgeschwindigkeit zu einem Erosionsverschleiß beiträgt, durch den der Drosselspalt vergrößert wird. Letztendlich führt dies zu nicht akzeptablen Undichtigkeiten, die durch entsprechende Reparaturen beseitigt werden müssen.

Zur Beseitigung dieser Nachteile muß der Drosselspalt sehr klein gehalten sein, was jedoch aufgrund der erforderlichen Genauigkeit nur mit einem sehr hohen Fertigungsaufwand und entsprechenden Fertigungskosten realisierbar ist. Größer dimensionierte Bauteile werden deshalb meistens nicht hergestellt.

Der vorliegenden Erfindung liegt daher die Aufgabe zugrunde, eine Dichtungseinrichtung der gattungsgemäßen Art so weiter zu entwickeln, daß eine verschleißbeständigere Abdichtung möglich ist und dadurch die Betriebskosten insgesamt wesentlich gesenkt werden.

Diese Aufgabe wird durch eine Dichtungseinrichtung gelöst, die die Merkmale des Anspruchs 1 aufweist.

Zweckmäßigerweise wird der Dichtring aus einer Hülse gebildet, die vorzugsweise aus Hartmetall oder Keramik besteht und die im Bereich der partiellen Verformung wulstartig ausgebildet ist. Der übrige Bereich des Dichtringes umschließt die Welle mit geringem Spaltabstand. Ebenso wie der Dichtring kann auch die Welle aus Keramik oder Hartmetall bestehen, jeweils in gleicher oder unterschiedlicher Zusammensetzung wie der Dichtring.

Vor einer Montage des Dichtringes weist dieser eine durchgehend glatte Innenwandung auf. Erst durch Beaufschlagung des deformierbaren Preßringes mit einer Kraft erfolgt die partielle Verformung in Richtung der Welle durch die übertragenden Deformationskräfte des Preßringes. Je nach aufgebrachter Kraft erfolgt eine mehr oder weniger starke Verformung, d. h. eine mehr oder weniger starke Ausbildung des Wulstringes, wodurch genau einstellbar ist, wie eng dieser Wulstring an der Welle anliegt.

Selbst bei einem Verschleiß dieses anliegenden Wulstringes durch die axiale und/oder Rotationsbewegung der Welle kann durch Nachstellen und eine dadurch bedingte weitere Deformation des Preßringes dieser Verschleiß ausgeglichen werden.

Der Preßring selbst besteht aus Metall oder einem geeigneten Kunststoff und stützt sich andererseits an der Wandung des druckfesten Gehäuses ab, das insoweit ein Widerlager darstellt.

Die Kraft zur Deformation des Preßringes und somit zur partiellen Verformung des Dichtinges kann über einen Druckring übertragen und durch Schrauben, Gewinde oder eine Hydraulik erzeugt werden, die im Niederdruckbereich angreift und größer ist als die sich aus dem in dem Hochdruckraum herrschenden Betriebsdruck ergebende Gegenkraft, wobei die Kraft frei einstellbar ist.

Die elastische Querverformung, die zu der Ausbildung des genannten Wulstringes führt, verkleinert den auch in diesem Bereich ursprünglich vorhandenen Spalt zwischen dem Dichtring und der Welle, und zwar je nach den gewünschten Anforderungen hinsichtlich Leckagemenge, auszugleichenden Fertigungstoleranzen und/oder Kompensation von vorausgegangenem Verschleiß. Bei Bedarf lassen sich Leckageströme sogar bis auf Null reduzieren.

Da der Dichtring bzw. die gesamte Dichteinrichtung nahezu verschleißfrei arbeitet, ergeben sich naturgemäß erhebliche Vorteile gegenüber dem Stand der Technik, insbesondere hinsichtlich der Betriebskosten. Ein Auswechseln des Dichtringes ist auch nach vielen Betriebsstunden noch nicht erforderlich, so daß die Standzeit der Vorrichtung, in die eine solche Dichtungseinnichtung eingebaut ist, signifikant größer ist, mit den sich daraus ergebenden Kostenvorteilen.

Vorteilhafte Weiterbildungen der Erfindung sind in den Unteransprüchen gekennzeichnet.

Ausführungsbeispiele der Erfindung werden nachfolgend anhand der beigefügten Zeichnungen beschrieben.

Es zeigen:

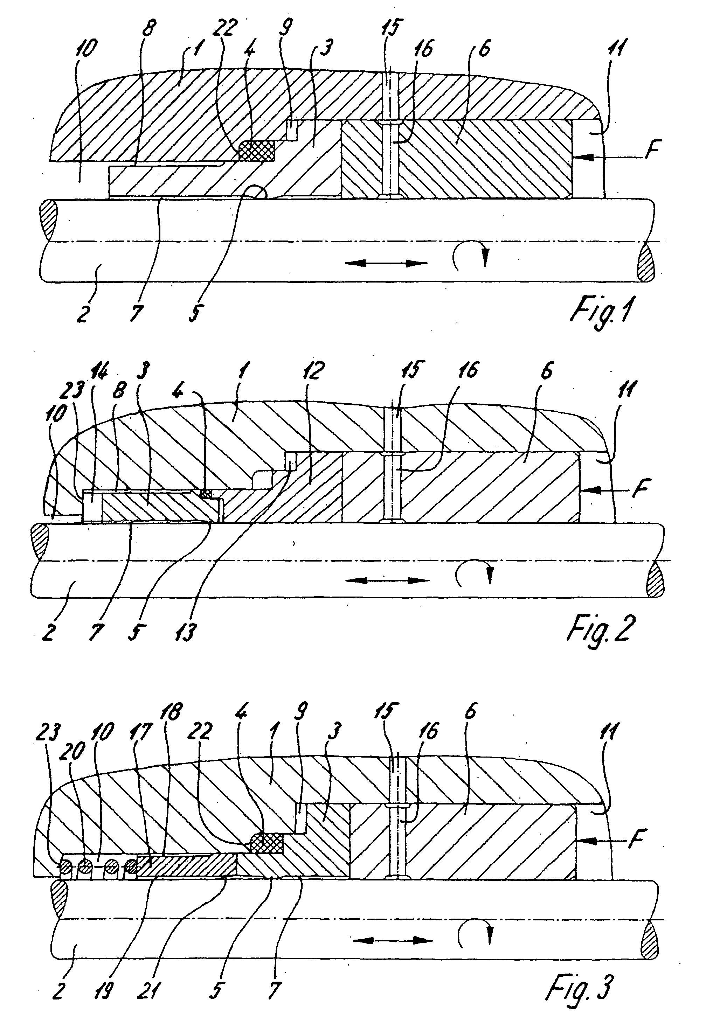

- Figuren 1 - 3: jeweils eine Dichtungseinrichtung in einem Halbschnitt.

In den Figuren ist jeweils eine Dichtungseinrichtung für eine Welle 2, alternativ eine Stange dargestellt, die in einer zwischen einem Hochdruckraum 10 und einem Niederdruckbereich 11 eines den Hochdruckraum 10 begrenzenden Gehäuses 1 angeordneten Führung bewegbar gelagert ist. Die Welle 2 kann sowohl ihn axialer Richtung hin und her bewegbar sein wie auch rotierend oder schwenkend.

Die Dichtungseinrichtung weist einen vorzugsweise aus Hartmetall oder Keramik bestehenden Dichtring 3 auf, der als Hülse ausgebildet ist und die Welle 2 umschließt, wobei der lichte Durchmesser des Dichtringes 3 im wesentlichen geringfügig größer ist als der Durchmesser der Welle 2, so daß sich ein Innenspalt 7 bildet.

An einem Teil des Außenmantels des Dichtringes 3 liegt ein eine statische Dichtung bildender Preßring 4 an, der deformierbar ist und aus Metall oder Kunststoff bestehen kann. Andererseits stützt sich dieser Preßring 4 an der Wandung des druckfesten Gehäuses 1 ab, wobei er bei dem in den Figuren 1 und 3 gezeigten Beispiel in einer Aufnahme 22 einliegt.

Über einen als Druckring fungierenden Laternenring 6 wird ausgehend vom Niederdruckbereich 11 eine Kraft F in axialer Richtung aufgebracht, so daß sich der Preßring 4 deformiert, wobei er von drei Seiten der Aufnahme 22 ausdehnungsfest gehalten ist, die zum einen von der Wandung des Gehäuses 1 und zum anderen von einem stufenförmigen Ansatz des Dichtringes 3 gebildet werden (Figuren 1 und 3). In dem Gehäuse 1 und dem Laternenring 6 sind Zuführbohrungen 15, 16 vorgesehen, über die zur Kühlung und Schmierung Flüssigkeit zwischen den Laternenring 6 und die Welle 2 bringbar ist.

Ein der Aufnahme 22 vergleichbarer Aufnahmeraum, in dem der Preßring 4 plaziert ist, wird bei dem in der Figur 2 gezeigten Ausführungsbeispiel neben dem Dichtring 3 und der Wandung des Gehäuses 1 durch eine Stirnseitenfläche eines Druckstückes 12 begrenzt, das zwischen dem Dichtring 3 und dem Laternenring 6 angeordnet ist und die Welle 2 ringförmig umschließt.

Bei Aufbringen der Kraft F werden die auf den Preßring 4 einwirkenden Deformationskräfte radial in Richtung der Welle 2 geleitet, wodurch sich eine partielle Verformung unter Ausbildung eines Wulstringes 5 an der Innenwandung des Dichtringes 3 ergibt, die je nach aufgebrachter Kraft F dazu führt, daß dieser Wulstring 5 an dieser Welle 2 anliegt oder nahezu anliegt.

Bei dem in der Figur 1 gezeigten Ausführungsbeispiel wird durch Druck auf den Laternenring 6 der Dichtring 3 axial verschoben, wobei er durch die axiale Verkleinerung einer Kammer 9 angrenzend zum Gehäuse 1 eine Vorspannung erfährt. Dabei ist die Kraft F größer als das Produkt aus dem Druck des Mediums im Hochdruckraum 10 und der druckbeaufschlagten Ringfläche des Dichtringes 3 in dem Hochdruckraum 10 abzüglich des Druckes im Niederdruckbereich 11 multipliziert mit der wirksamen Ringfläche des Laternenringes 6.

Je nach Einstellung der Kraft F über Schrauben, Gewinde oder hydraulische Einrichtungen nähert sich der Wulstring 5 mehr oder weniger der Welle 2. Dabei kann der Wulstring 5 sogar eine gewisse Druckspannung auf die Welle 2 ausüben.

Während in den Ausführungsbeispielen gemäß den Figuren 1 und 3 der Dichtring 3 axial verschiebbar gelagert ist, ist er bei dem in der Figur 2 gezeigten Beispiel fest positioniert, d. h., er stützt sich am Grund einer Schulter 23 ab, während er am gegenüber liegenden Ende den Preßring 4 trägt. Die Ausformung zum Wulstring 5 erfolgt hierbei ebenfalls wie zuvor beschrieben über den Laternenring 6, allerdings mittelbar, da das Druckstück 12 zwischen dem Dichtring 3 und dem Laternenring 6 angeordnet ist.

Eine Aufweitung des Innenspaltes 7 des Dichtkörpers 3 aufgrund des Innendrucks und eine damit einhergehende Abnahme der Dichtwirkung des Wulstringes 5 wird durch einen Außenspalt 8 verhindert, der dadurch gebildet ist, daß der Außendurchmesser des Dichtringes 3 in einem im wesentlichen in den Hochdruckraum 10 ragenden Längenbereich kleiner ist als der lichte Durchmesser des Hochdruckraumes 10.

Dieser Außenspalt 8 steht in Verbindung mit dem Hochdruckraum 10, so daß im Innenspalt 7, der ebenfalls mit dem Hochdruckraum 10 in Verbindung steht, und dem Außenspalt 8 derselbe Druck herrscht wie im Hochdruckraum 10.

Bei dem in der Figur 2 gezeigten Beispiel wird die Verbindung zwischen dem Hochdruckraum 10 und dem Außenspalt 8 durch in dem Dichtring 3 vorgesehene Radialnuten 14 hergestellt, die auf der Stirnseite des Dichtringes 3 vorgesehen sind, die sich an der Schulter 23 des Gehäuses 1 abstützt.

Im übrigen ergibt sich durch den Innenspalt 7 eine Drosselung und damit teilweise Reduzierung des Druckes, so daß an dem durch den Wulstring 5 gebildeten Dichtbereich ein geringerer Druck ansteht als im Hochdruckraum 10.

Die Ausführungsvariante nach Figur 2, bei der der Dichtring 3 in Richtung der Kraft F fest an der Schulter 23 anliegt und die Kraft F über das Druckstück 12 auf den Preßring 4 gebracht wird, bietet den Vorteil einer besseren Einstellbarkeit insbesondere bei größeren Längen der Dichteinrichtung. Ferner können für den Dichtring 3 und das Druckstück 12 unterschiedliche, für die jeweilige Funktion optimale Werkstoffe verwendet werden.

Bei der in der Figur 3 dargestellten Dichteinrichtung ist der Dichtring 3 gegenüber dem in der Figur 1 relativ kurz gehalten. Die Drosselung des Druckes erfolgt hier über eine Hülse 17, an deren einer Stirnseite der Dichtkörper 3 anliegt und die auf ihrer dem Dichtkörper 3 zugewandten Seite in Verlängerung eines Innenspaltes 19 eine Fase 21 aufweist, durch die eine Verringerung der Kontaktfläche mit dem Dichtkörper 3 und eine damit verbundene Erhöhung der axialen Kontaktspannung bewirkt, die höher ist als der Druck im Hochdruckraum 8. Damit wird eine Dichtwirkung erzeugt, die einen Druckausgleich zwischen einem zum Hochdruckraum 10 hin offenen Außenspalt 18 und dem Innenspalt 19 verhindert, wobei der Außenspalt 18 kürzer ist als der insoweit sich über die gesamte Länge der Hülse 17 erstreckende Innenspalt 19.

Um eine Initialvorspannung zu erzeugen, ist eine Druckfeder 20 vorgesehen, die sich einerseits an der Schulter 23 des Gehäuses 1 und andererseits an der dem Dichtring 3 abgewandten Stirnseite der Hülse 17 abstützt.

### Bezugszeichenliste

- 1: Gehäuse
- 2: Welle
- 3: Dichtring
- 4: Preßring
- 5: Wulstring
- 6: Laternenring
- 7: Innenspalt
- 8: Außenspalt
- 9: Kammer
- 10: Hochdruckraum
- 11: Niederdruckbereich
- 12: Druckstück
- 13: Kammer
- 14: Radialnut
- 15: Zuführbohrung
- 16: Zuführbohrung
- 17: Anschlaghülse
- 18: Spalt
- 19: Spalt
- 20: Druckfeder
- 21: Fase
- 22: Aufnahme
- 23: Schulter

## Patentansprüche

1. Dichtungseinrichtung für eine Welle (2) oder Stange, die in einer zwischen einem Hochdruckraum (10) und einem Niederdruckbereich (11) eines den Hochdruckraum (10) begrenzenden, druckfesten Gehäuses (1) angeordneten Führung bewegbar gelagert und von einem Dichtring (3) umschlossen ist, der mittels eines deformierbaren, sich unter Druck am Außenumfang abstützenden Preßringes (4) partiell verformt und umfänglich an der Welle (2) oder der Stange anliegt oder nahezu anliegt **dadurch gekennzeichnet, daß** der Dichtring (3) aus Hartmetall oder Keramik besteht.

2. Dichtungseinrichtung nach Anspruch 1, **dadurch gekennzeichnet, daß** der auf den Preßring (4) bzw. den Dichtring (3) wirkende Druck frei einstellbar ist.

3. Dichtungseinrichtung nach Anspruch 1, **dadurch gekennzeichnet, daß** der Dichtring (3) mit geringem Abstand, unter Bildung eines Innenspaltes (7) auf der Welle (2) geführt ist, wobei die partielle Verformung unter Ausbildung eines Wulstringes (5) im Bereich des Innenspaltes (7) vorliegt.

4. Dichtungseinrichtung nach Anspruch 1, **dadurch gekennzeichnet, daß** der Dichtring (3) als Hülse ausgebildet ist.

5. Dichtungseinrichtung nach Anspruch 1, **dadurch gekennzeichnet, daß** der Preßring (4) mittels des Dichtringes (3) deformierbar ist.

6. Dichtungseinrichtung nach Anspruch 5 **dadurch gekennzeichnet, daß** der Preßring (4) in einer Aufnahme (22) des Gehäuses (1) einliegt.

7. Dichtungseinrichtung nach Anspruch 5 oder 6, **dadurch gekennzeichnet, daß** der Dichtring (3) axial verschiebbar auf der Welle (2) gelagert ist.

8. Dichtungseinrichtung nach einem der Ansprüche 5-7, **dadurch gekennzeichnet, daß** eine Kraft (F) über einen Druckring, vorzugsweise in Form eines Laternenrings (6) auf den Dichtring (3) bringbar ist.

9. Dichtungseinrichtung nach Anspruch 8, **dadurch gekennzeichnet, daß** die Kraft (F) über Schrauben, Gewinde oder hydraulisch aufbringbar ist.

10. Dichtungseinrichtung nach Anspruch 1 oder 3, **dadurch gekennzeichnet, daß** zwischen dem Dichtring (3) und der angrenzenden Wandung des Gehäuses (1) ein Außenspalt (8) gebildet ist, wobei der Innenspalt (7) und der Außenspalt (8) mit dem Druckraum (10) in Verbindung stehen.

11. Dichtungseinrichtung nach Anspruch 1, **dadurch gekennzeichnet, daß** der Preßring (4) aus Metall oder Kunststoff besteht.

12. Dichtungseinrichtung nach Anspruch 1, **dadurch gekennzeichnet, daß** der Dichtungsring (3) und/oder die Welle (2) oder Stange aus Hartmetall oder Keramik gleicher oder unterschiedlicher Zusammensetzung bestehen.

13. Dichtungseinrichtung nach Anspruch 1, **dadurch gekennzeichnet, daß** der Dichtring (3) bei Belastung durch die Kraft (F) stirnseitig an einer Schulter (23) des Gehäuses (1) anliegt.

14. Dichtungseinrichtung nach Anspruch 12 oder 13, **dadurch gekennzeichnet, daß** im Anlagebereich des Dichtringes (3) mit der Schulter (23) Radialnuten (14) vorgesehen sind, durch die eine Verbindung zwischen dem Außenspalt (8) und dem Hochdruckraum (10) hergestellt ist.

15. Dichtungseinrichtung nach Anspruch 13, **dadurch gekennzeichnet, daß** der Preßring (4) mittels eines axial auf der Welle (2) geführten Druckstückes (12) deformierbar ist, wobei der Preßring (4) sich an dem Dichtring (3) und der Wandung des Gehäuses (1) abstützt.

16. Dichtungseinrichtung nach Anspruch 15, **dadurch gekennzeichnet, daß** das Druckstück (12) zwischen dem Laternenring (6) und dem Dichtring (3) angeordnet ist.

17. Dichtungseinrichtung nach Anspruch 1, **dadurch gekennzeichnet, daß** der Dichtring (3) mit seiner in Wirkrichtung der Kraft (F) gesehen dem Preßring (4) nachgeordneten Stirnseite an der Stirnseite einer Hülse (17) anliegt, die sich andererseits an einer Druckfeder (20) abstützt, die auf der Schulter (23) des Gehäuses (1) aufliegt.

18. Dichtungseinrichtung nach Anspruch 17, **dadurch gekennzeichnet, daß** zwischen der Welle (2) und der Hülse (17) ein Innenspalt (19) gebildet ist, der sich dem dem Dichtring (3) zugewandten Endbereich in Form einer Fase (21) erweitert und sich über die gesamte Länge der Hülse (17) erstreckt.

19. Dichtungseinrichtung nach Anspruch 17, **dadurch gekennzeichnet, daß** zwischen der Hülse (17) und der zugeordneten Wandung des Gehäuses (1) ein Außenspalt (18) gebildet ist, der zum Hochdruckraum (10) offen ist und sich über eine Teillänge der Hülse (17) erstreckt.

20. Dichtungseinrichtung nach einem oder mehreren der Ansprüche 1-19, **dadurch gekennzeichnet, daß** in dem Gehäuse (1) und dem Laternenring (6) Zuführbohrungen (15, 16) vorgesehen sind, über die zur Kühlung und Schmierung Flüssigkeit zwischen den Laternenring (6) und die Welle (2) bringbar ist.

## Claims

1. Sealing device for a shaft (2) or rod which is movably mounted in a guide arranged between a high-pressure space (10) and a low-pressure space (11) of a pressure-resistant housing (1) delimiting the high-pressure space (10) and is enclosed by a sealing ring (3) which is partially deformed by means of a deformable press ring (4), which is supported under pressure on the outer circumference, and whose circumference rests or virtually rests on the shaft (2) or the rod, **characterized in that** the sealing ring (3) is composed of hard metal or ceramic.

2. Sealing device according to Claim 1, **characterized in that** the pressure acting on the press ring (4) or the sealing ring (3) is freely adjustable.

3. Sealing device according to Claim 1, **characterized in that** the sealing ring (3) is guided on the shaft (2) at a slight spacing so as to form an inner gap (7), the partial deformation being present in the region of the inner gap (7) so as to form a bead ring (5).

4. Sealing device according to Claim 1, **characterized in that** the sealing ring (3) is configured as a sleeve.

5. Sealing ring according to Claim 1, **characterized in that** the press ring (4) can be deformed by means of the sealing ring (3).

6. Sealing device according to Claim 5, **characterized in that** the press ring (4) fits into a receptacle (22) of the housing (1).

7. Sealing device according to Claim 5 or 6, **characterized in that** the sealing ring (3) is mounted on the shaft (2) so as to be axially displaceable.

8. Sealing device according to one of Claims 5 - 7, **characterized in that** a force (F) can be exerted on the sealing ring (3) via a pressure ring, preferably in the form of a lantern ring (6).

9. Sealing ring according to Claim 8, **characterized in that** the force (F) can be exerted via screws, threads or hydraulically.

10. Sealing ring according to Claim 1 or 3, **characterized in that** an outer gap (8) is formed between the sealing ring (3) and the adjacent wall of the housing (1), the inner gap (7) and the outer gap (8) being connected to the pressure space (10).

11. Sealing device according to Claim 1, **characterized in that** the press ring (4) is composed of metal or plastic.

12. Sealing device according to Claim 1, **characterized in that** the sealing ring (3) and/or the shaft (2) or rod are/is composed of hard metal or ceramic of identical or different composition.

13. Sealing device according to Claim 1, **characterized in that**, when loaded by the force (F), a front side of the sealing ring (3) rests on a shoulder (23) of the housing (1).

14. Sealing device according to Claim 12 or 13, **characterized in that**, in the region of contact between the sealing ring (3) and the shoulder (23), radial grooves (14) are provided, by means of which a connection between the outer gap (8) and the high-pressure space (10) is produced.

15. Sealing device according to Claim 13, **characterized in that** the press ring (4) can be deformed by means of a pressure piece (12) guided axially on the shaft (2), the press ring (4) being supported on the sealing ring (3) and the wall of the housing (1).

16. Sealing device according to Claim 15, **characterized in that** the pressure piece (12) is arranged between the lantern ring (6) and the sealing ring (3).

17. Sealing device according to Claim 1, **characterized in that** the front side, arranged behind the press ring (4) as seen in the direction of action of the force (F), of the sealing ring (3) rests on the front side of a sleeve (17) whose other side is supported on a compression spring (20) which rests on the shoulder (23) of the housing (1).

18. Sealing device according to Claim 17, **characterized in that** an inner gap (19) is formed between the shaft (2) and the sleeve (17), which inner gap (19) is extended in the form of a bevel (21) in the end region facing the sealing ring (3) and extends over the entire length of the sleeve (17).

19. Sealing device according to Claim 17, **characterized in that** an outer gap (18) is formed between the sleeve (17) and the associated wall of the housing (1), which outer gap (18) is open towards the high-pressure space (10) and extends over a partial length of the sleeve (17).

20. Sealing device according to one or more of Claims 1 - 19, **characterized in that** feed bores (15, 16) are provided in the housing (1) and the lantern ring (6), via which feed bores (15, 16) the liquid for cooling and lubrication can be introduced between the lantern ring (6) and the shaft (2).

## Revendications

1. Dispositif d'étanchéité pour un arbre (2) ou une tige qui est logé de manière mobile dans un guide disposé dans un boîtier (1) résistant à la pression limitant une chambre à haute pression (10) entre une chambre de haute pression (10) et une partie de basse pression (11) et qui est entouré par une bague d'étanchéité (3) qui se déforme partiellement sous la pression à l'aide d'une bague de pression (4) déformable appuyée sur la circonférence externe et qui est en contact ou presque en contact avec la circonférence de l'arbre (2) ou de la tige, **caractérisé en ce que** la bague d'étanchéité (3) est constituée de métal dur ou de céramique.

2. Dispositif d'étanchéité selon la revendication 1, **caractérisé en ce que** la pression appliquée sur la bague de pression (4) ou sur la bague d'étanchéité (3) peut être ajustée librement.

3. Dispositif d'étanchéité selon la revendication 1, **caractérisé en ce que** la bague d'étanchéité (3) est guidée à une faible distance, en formant un intervalle interne (7) sur l'arbre (2), la déformation partielle existant au niveau de l'intervalle interne (7) et formant un bourrelet (5).

4. Dispositif d'étanchéité selon la revendication 1, **caractérisé en ce que** la bague d'étanchéité (3) est conçue comme un manchon.

5. Dispositif d'étanchéité selon la revendication 1, **caractérisé en ce que** la bague de pression (4) peut être déformée à l'aide de la bague d'étanchéité (3).

6. Dispositif d'étanchéité selon la revendication 5, **caractérisé en ce que** la bague de pression (4) s'insère dans un logement (22) du boîtier (1).

7. Dispositif d'étanchéité selon la revendication 5 ou 6, **caractérisé en ce que** la bague d'étanchéité (3) est logée de manière coulissante axialement sur l'arbre (2).

8. Dispositif d'étanchéité selon la revendication 5 à 7, **caractérisé en ce qu'**une force (F) peut être exercée sur une bague de pression, de préférence sous la forme d'une bague lanterne (6) sur la bague d'étanchéité (3).

9. Dispositif d'étanchéité selon la revendication 8, **caractérisé en ce que** la force (F) peut être exercée par l'intermédiaire de vis, de filetages ou hydrauliquement.

10. Dispositif d'étanchéité selon la revendication 1 ou 3, **caractérisé en ce que**, entre la bague d'étanchéité (3) et la paroi du boîtier (1), un intervalle externe (8) est formé, l'intervalle interne (7) et l'intervalle externe (8) étant reliés à l'aide de la chambre sous pression (10).

11. Dispositif d'étanchéité selon la revendication 1, **caractérisé en ce que** la bague de pression (4) est constituée de métal ou de matières plastiques.

12. Dispositif d'étanchéité selon la revendication 1, **caractérisé en ce que** la bague d'étanchéité (3) et/ou l'arbre (2) ou la tige sont constitués de métal dur ou de céramique de même composition ou d'une composition différente.

13. Dispositif d'étanchéité selon la revendication 1, **caractérisé en ce que** la bague d'étanchéité (3) s'appuie, lors d'une contrainte exercée par la force (F), du côté frontal au niveau d'un épaulement (23) du boîtier (1).

14. Dispositif d'étanchéité selon la revendication 12 ou 13, **caractérisé en ce que**, au niveau de l'appui de la bague d'étanchéité (3) sur l'épaulement (23), des rainures radiales (14) sont prévues, à l'aide desquelles une relation est établie entre l'intervalle externe (8) et la chambre de basse pression (10).

15. Dispositif d'étanchéité selon la revendication 13, **caractérisé en ce que** la bague de pression (4) peut être déformée à l'aide d'un élément de pression (12) guidé axialement sur l'arbre (2), la bague de pression (4) s'appuyant sur la bague d'étanchéité (3) et la paroi du boîtier (1).

16. Dispositif d'étanchéité selon la revendication 15, **caractérisé en ce que** l'élément de pression (12) est disposée entre la bague lanterne (6) et la bague d'étanchéité (3).

17. Dispositif d'étanchéité selon la revendication 1, **caractérisé en ce que** la bague d'étanchéité (3) s'appuie, avec son côté frontal disposé après la bague de pression (4) dans la direction d'application de la force (F), sur le côté frontal d'un manchon (17) qui s'appuie d'autre part sur un ressort à compression (20) qui repose sur l'épaulement (23) du boîtier (1).

18. Dispositif d'étanchéité selon la revendication 17, **caractérisé en ce que**, entre l'arbre (2) et le manchon (17), un intervalle interne (19) est formé, qui s'élargit, à l'extrémité orientée vers la bague d'étanchéité (3), sous la forme d'un chanfrein (21) et s'étend sur toute la longueur du manchon (17).

19. Dispositif d'étanchéité selon la revendication 17, **caractérisé en ce que**, entre le manchon (17) et la paroi correspondante du boîtier (1), un intervalle externe (18) est formé, qui est ouvert du côté de la chambre à haute pression (10) et qui s'étend sur une longueur partielle du manchon (17).

20. Dispositif d'étanchéité selon l'une ou plusieurs des revendications 1 à 19, **caractérisé en ce que**, dans le bottier (1) et la bague lanterne (6) des alésages d'alimentation (15, 16) sont prévus, par lesquels, pour le refroidissement et la lubrification, un liquide peut être introduit entre la bague lanterne (6) et l'arbre (2).
